# EUROPEAN PATENT APPLICATION

(11) **EP 4 482 193 A1**
(43) Date of publication of application: **25.12.2024**
(21) Application number: 22926785.1
(22) Date of filing: 01.11.2022
(51) Int. Cl.: H04W 24/02

(54) **INTELLIGENT ANALYSIS AND APPLICATION SYSTEM AND METHOD FOR WIRELESS COMMUNICATION NETWORK KNOWLEDGE GRAPH**

(30) Priority: 17.02.2022 CN 202210144211
(71) Applicant: Purple Mountain Laboratories, Nanjing, Jiangsu 211111 (CN)
(72) Inventor: HE, Shiwen, Nanjing, Jiangsu 211111 (CN); HUANG, Yongming, Nanjing, Jiangsu 211111 (CN); REN, Peng, Nanjing, Jiangsu 211111 (CN); ZHAN, Hang, Nanjing, Jiangsu 211111 (CN); WANG, Liangpeng, Nanjing, Jiangsu 211111 (CN); AN, Zhenyu, Nanjing, Jiangsu 211111 (CN); YI, Yunshan, Nanjing, Jiangsu 211111 (CN); YOU, Xiaohu, Nanjing, Jiangsu 211111 (CN)
(74) Representative: Casalonga
(86) International application number: PCT/CN2022/128902
(87) International publication number: WO 2023/155481

(57) **Abstract**

Provided are a system and method for intelligently analyzing and applying a wireless communication network knowledge graph. The system includes at least a knowledge graph unit, an intelligent traceability unit, and a tuning strategy unit. The knowledge graph unit is configured to construct the wireless communication network knowledge graph, and achieve deep analysis and cyclic tuning of the graph in combination with wireless communication network data; the intelligent traceability unit is configured to detect a network anomaly and trace a cause and a source; and the tuning strategy unit is configured to generate a plurality of tuning strategies, determine an optimal tuning strategy, and perform tuning on a wireless communication network. According to the system provided in the present disclosure, intelligent closed-loop feedback is formed, and cyclic tuning is performed on a wireless communication network, thereby effectively improving the performance of the wireless communication network and OoE of users.

## Description

### Cross-Reference to Related Disclosure

The present application claims the priority of Chinese Patent Application No. 202210144211.7 filed on February 17, 2022, and entitled "System and Method for Intelligently Analyzing and Applying Wireless Communication Network Knowledge Graph", the disclosure of which is hereby incorporated by reference in its entirety.

### Technical Field

The present disclosure relates to the technical field of intelligent transmission and management of wireless communication networks, and in particular to a system and method for intelligently analyzing and applying a wireless communication network knowledge graph.

### Background

With the continuous development of the wireless mobile communication technology, people put forward higher and higher requirements for indicators such as bandwidth, data transmission rate, time delay, reliability, etc. Especially nowadays, we have entered the 5G era, and three typical application scenarios of Enhanced Mobile Broadband (eMBB), massive Machine Type of Communication (mMTC), and Ultra-reliable and Low Latency Communications (uRLLC) are introduced, causing wireless communication networks to have more and more complex structures and more and more diversified functions. In addition, the terminal types and behaviors, data service demands, and system resources of the wireless communication networks have significant characteristics such as higher dynamics, stronger timeliness, and mutual coupling.

One wireless communication network is constituted by a plurality of elements such as a user terminal, an access network, a core network, etc., and the network structure is generally relatively complex, including tens of thousands of performance indicators and data fields, and involving different network elements, protocol stacks, and so on. These indicators are generally used for characterizing the performance of the wireless communication network, and are important parameters to measure an operating state of one wireless communication network. In another aspect, these indicators are also closely related to Quality of Experience (QoE) of users. In view of the complexity of a wireless communication network structure and the diversity of service types, these endogenous factor correlations between wireless communication network data are often complex. Thus, there are numerous factors that affect the performance of the wireless communication networks and the QoE of the users, and the structure and operating mechanism of the entire wireless communication network can be better understood by effectively clarifying the correlations among the various indicators and the data fields, so as to accurately position causes of these changes when the performance of networks deteriorates and the QoE of the users degrades, thereby providing corresponding tuning solutions for specific causes.

### Summary

In view of problems in the related art, the present disclosure provides a system and method for intelligently analyzing and applying a wireless communication network knowledge graph.

In a first aspect, the present disclosure provides a system for intelligently analyzing and applying a wireless communication network knowledge graph, including at least: a knowledge graph unit, an intelligent traceability unit, and a tuning strategy unit; wherein the knowledge graph unit is configured to construct the wireless communication network knowledge graph based on endogenous factors of a wireless communication network and a graph construction method, and perform deep analysis and graph cyclic tuning in combination with classified wireless communication network data; the intelligent traceability unit is configured to determine a diagnostic positioning result for a wireless communication network anomaly based on the tuned wireless communication network knowledge graph, an anomaly detection algorithm and an intelligent reasoning algorithm; and the tuning strategy unit is configured to determine a plurality of tuning strategies based on a strategy generation algorithm and the diagnostic positioning result, and determine, in combination with an intelligent decision algorithm, one optimal tuning strategy from the plurality of tuning strategies by using a best result when considering an execution efficiency and an execution effect of a tuning strategy as a target, so as to perform tuning on the wireless communication network.

In a second aspect, the present disclosure further provides a method for intelligently analyzing and applying a wireless communication network knowledge graph, including: constructing the wireless communication network knowledge graph based on endogenous factors of a wireless communication network and a graph construction method, and performing deep analysis and graph cyclic tuning in combination with classified wireless communication network data; determining a diagnostic positioning result for a wireless communication network anomaly based on the tuned wireless communication network knowledge graph, an anomaly detection algorithm and an intelligent reasoning algorithm; and determining a plurality of tuning strategies based on a strategy generation algorithm and the diagnostic positioning result, and determining, in combination with an intelligent decision algorithm, one optimal tuning strategy from the plurality of tuning strategies by using a best result when considering an execution efficiency and an execution effect of a tuning strategy as a target, so as to perform tuning on the wireless communication network.

In a third aspect, the present disclosure further provides an electronic device, including a memory, a transceiver, and a processor; the memory is configured to store a computer program; the transceiver is configured to receive and send data under a control of the processor; and the processor is configured to read the computer program in the memory and implement steps of the method for intelligently analyzing and applying a wireless communication network knowledge graph described in the second aspect.

In a fourth aspect, the present disclosure further provides a non-transient computer readable storage medium, having a computer program stored thereon. The computer program implements, when being executed by a processor, steps of the method for intelligently analyzing and applying the wireless communication network knowledge graph described in the second aspect.

In a fifth aspect, the present disclosure further provides a computer program product, including a computer program. The computer program implements, when being executed by a processor, steps of the method for intelligently analyzing and applying the wireless communication network knowledge graph described in the second aspect.

According to the system and method for intelligently analyzing and applying the wireless communication network knowledge graph provided in the present disclosure, through the endogenous factors of the wireless communication network, the wireless communication network knowledge graph is preliminarily constructed in combination with communication expert knowledge and 3GPP communication protocols, deep analysis is performed on the correlations among the endogenous factors, the tuning and updating of the graph are completed by using analysis results, after the network communication anomaly is detected, root cause tracing and diagnostic positioning are performed by using an intelligent reasoning module, a strategy generation module is configured to provide the plurality of feasible tuning strategies, and then the strategy decision module selects and issues one specific strategy to the wireless communication network for execution, so as to cyclically tune the wireless communication network, such that the performance of the wireless communication network and the QoE of users are effectively improved.

### Brief Description of the Drawings

In order to more clearly illustrate the embodiments of the present disclosure or the technical solutions in the related art, the drawings used in the description of the embodiments or the related art will be briefly described below. It is apparent that the drawings in the following descriptions are some embodiments of the present disclosure. Other drawings can be obtained from those skilled in the art according to these drawings without any creative work.
Fig. 1 is a schematic diagram of a system for intelligently analyzing and applying a wireless communication network knowledge graph according to the present disclosure.
Fig. 2 is a flowchart of a method for intelligently analyzing and applying a wireless communication network knowledge graph according to the present disclosure.
Fig. 3 is an overall flowchart of a method for intelligently analyzing and applying a wireless communication network knowledge graph according to the present disclosure.
Fig. 4 is a service flowchart of a method for intelligently analyzing and applying a wireless communication network knowledge graph according to the present disclosure.
Fig. 5 is a partial schematic diagram of an air interface delay knowledge graph of a wireless communication network knowledge graph according to the present disclosure.
Fig. 6 is a schematic structural diagram of an electronic device according to the present disclosure.

### Detailed Description of the Embodiments

In order to make objectives, technical solutions, and advantages of the present disclosure clearer, the technical solutions in the disclosure will be clearly and completely described below in combination with the drawings in the present disclosure. It is apparent that the described embodiments are only part of the embodiments of the present disclosure, not all the embodiments. Based on the embodiments in the present disclosure, all other embodiments obtained by those of ordinary skilled in the art without creative work shall fall within the protection scope of the present disclosure.

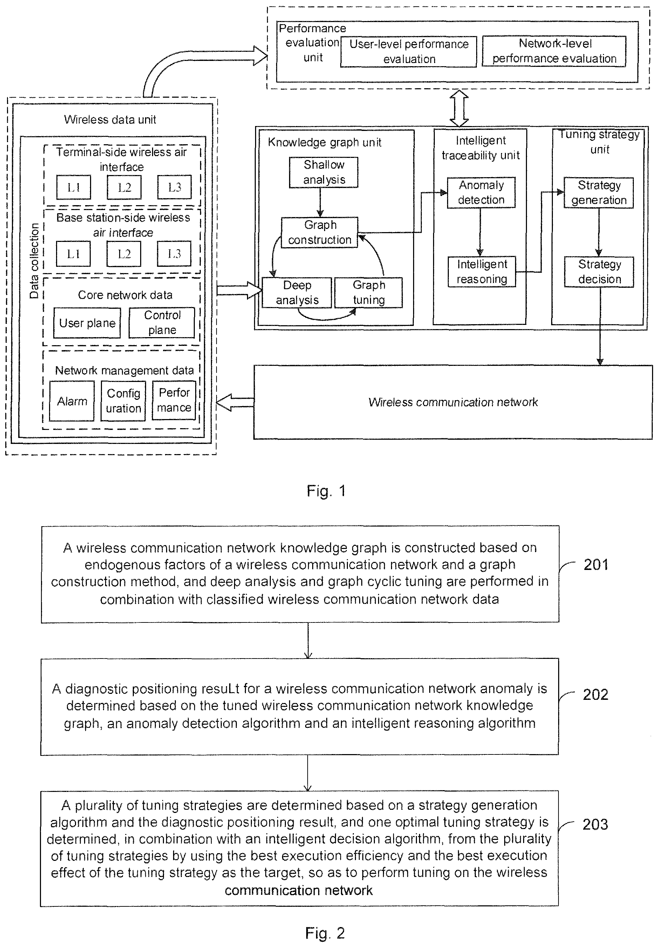

A system and method for intelligently analyzing and applying a wireless communication network knowledge graph of the present disclosure are described below with reference to Figs. 1 to 6.

Fig. 1 is a schematic diagram of a system for intelligently analyzing and applying a wireless communication network knowledge graph according to the present disclosure. As shown in Fig. 1, the system for intelligently analyzing and applying the wireless communication network knowledge graph includes at least a knowledge graph unit, an intelligent traceability unit, and a tuning strategy unit.

The knowledge graph unit is configured to construct the wireless communication network knowledge graph based on endogenous factors of a wireless communication network and a graph construction method, and perform deep analysis and graph cyclic tuning in combination with classified wireless communication network data.

The intelligent traceability unit is configured to determine a diagnostic positioning result for a wireless communication network anomaly based on the tuned wireless communication network knowledge graph, an anomaly detection algorithm and an intelligent reasoning algorithm.

The tuning strategy unit is configured to determine a plurality of tuning strategies based on a strategy generation algorithm and the diagnostic positioning result, and determine, in combination with an intelligent decision algorithm, one optimal tuning strategy from the plurality of recommended tuning strategies by using a best result when considering an execution efficiency and an execution effect of a tuning strategy as a target, so as to perform tuning on the wireless communication network.

As at least one alternative embodiment, in view of the complexity of the wireless communication network structure and the diversity of service types, these endogenous factor correlations between wireless communication network data are often complex. Thus, there are numerous factors that affect the performance of the wireless communication network and the QoE of users, and the structure and operating mechanism of the entire wireless communication network can be better understood by effectively clarifying correlations among the various indicators and the data fields. In order to improve the performance of the wireless communication network and improve the QoE of users, the present disclosure provides a system and method for intelligently analyzing and applying a wireless communication network knowledge graph, so as to provide powerful support for realizing the intelligence of the wireless communication network.

The system includes at least the knowledge graph unit, the intelligent traceability unit, and the tuning strategy unit.
(1) The knowledge graph unit is configured to construct the wireless communication network knowledge graph based on the endogenous factors of the wireless communication network and the graph construction method, and perform deep analysis and graph cyclic tuning in combination with the classified wireless communication network data. The wireless communication network knowledge graph is constructed by triples, wherein the triples consist of elements in an entity library initialized based on the endogenous factors of the wireless communication network and elements in an inter-entity relationship library. The endogenous factors of the wireless communication network include indicators and data fields specified by wireless communication network protocols. The classified wireless communication network data may be directly classified according to protocols, or classified based on rules set manually, which mainly facilitates subsequent data processing and improves processing efficiency.

Optionally, in an embodiment of the present disclosure, the knowledge graph unit includes at least a deep analysis module and a graph tuning module.

The deep analysis module is configured to determine one or more of: new entities, new entity types, new entity attributes, and new relationships among various entities in the wireless communication network knowledge graph based on a graph model analysis algorithm and a data model analysis algorithm, and complete association degrees of the relationships among the various entities.

The graph tuning module is configured to update the wireless communication network knowledge graph based on the updated entity library and/or the updated inter-entity relationship library.

As at least one alternative embodiment, the knowledge graph unit includes at least the deep analysis module and the graph tuning module.

The deep analysis module uses the entity library and inter-entity relationship library for constituting initially the wireless communication network knowledge graph as inputs, and the deep analysis module mainly has two functions. The first function is to quantify and measure the association degree of the relationship between the two entities from the perspective of the graph model algorithm, so as to establish edge connection strength; and the second function is to perform, from the perspective of data, deep analysis on one or more of: the new entities, the new entity types, the new entity attributes, the new inter-entity relationships, and the association degrees in the wireless communication network knowledge graph. The entity library and the inter-entity relationship library for constituting initially the wireless communication network knowledge graph are determined based on the endogenous factors of the wireless communication network; and the endogenous factors of the wireless communication network comprise the indicators and the data fields specified by the wireless communication network protocols. Each element in the entity library includes an entity type corresponding to the element and all attributes owned by the element; and the inter-entity relationship library includes a specific relationship between every two elements, an association degree of the specific relationship between every two elements, etc.

Optionally, in the embodiment of the present disclosure, determining the new relationships among various entities in the wireless communication network knowledge graph, analyzing the association degrees of the relationships among the various entities, and updating the inter-entity relationship library based on the graph model analysis algorithm and the data model analysis algorithm, and/or determining one or more of: the new entities, the new entity types, and the new entity attributes in the wireless communication network knowledge graph, and updating the entity library includes the following operations.

Quantitative measurements of the association degrees of the relationships among the various entities in the wireless communication network knowledge graph are determined based on the graph model algorithm, and the inter-entity relationship library is updated.

One or more of: the new entities, the new entity types, the new entity attributes, and the new relationships among the various entities in the wireless communication network knowledge graph are determined based on the acquired classified wireless communication network data, and the entity library and/or the inter-entity relationship library are/is updated.

As at least one alternative embodiment, the first of the main functions of the deep analysis module is that, the deep analysis module performs the data-driven deep analysis on wireless communication network knowledge graph, uses real-time data of the wireless communication network collected by a wireless data unit, deeply analyzes the association degree and dependency relationship between nodes (entities) in an endogenous factor knowledge graph from the perspective of data, and determines one or more of: the new entities, the new entity types, the new entity attributes, and the new inter-entity relationships. The second of the main functions of the deep analysis module is that, based on the wireless communication network knowledge graph constructed after shallow analysis, relies on a theoretical analysis method based on the graph model, the deep analysis module deeply excavates endogenous correlations between the nodes, such as a correlation between an indicator and a data field, a correlation between the indicator and the indicator, a correlation between the data field and the data field, etc., i.e., determines the association degrees and the dependency relationships between the inter-entity relationships. The association degree and the dependency relationship between two nodes (entities) are quantified and measured, so as to establish the edge connection strength.

After deep analysis is performed on the wireless communication network knowledge graph, entities or entity relationships newly added in the wireless communication network knowledge graph may be obtained, and then optimization needs to be performed on the wireless communication network knowledge graph, which is mainly completed by the graph tuning module. The graph tuning module is mainly configured to determine a tuning content and a tuning direction of the wireless communication network knowledge graph.

Optionally, in the embodiment of the present disclosure, updating the wireless communication network knowledge graph based on the updated entity library and/or the updated inter-entity relationship library includes the following operations.

Parameters to be tuned are determined based on wireless communication network protocol specifications and theoretical analysis algorithms, and the updated entity library and/or the updated inter-entity relationship library; wherein the parameter to be tuned in the wireless communication network knowledge graph includes one or more of: parameters of entities, parameters of entity attributes, and parameters related to inter-entity relationships.

The wireless communication network knowledge graph is updated based on the parameters to be tuned.

As at least one alternative embodiment, the graph tuning module uses related analysis results of the deep analysis module as inputs, i.e., uses the updated entity library and/or the updated inter-entity relationship library as inputs, and outputs the tuning content and the tuning direction of the wireless communication network knowledge graph, including addition or deletion of the entities, which may be understood as the tuning and updating (for example, correction of an error graph structure, completion of an omitted graph structure, etc.) of graph structure; the tuning and updating (for example, deletion of excess correlations, correction of an error correlation or modification of an association degree of two inter-entity relationships from an association degree 2 to an association degree 3, etc.) of the inter-entity relationships, where a specific association degree value may represent the strength of the association degree of two inter-entity relationship; if the value is greater, it may indicate that the association degree is stronger, or may indicate that the association degree is weaker; or the updating (for example, the tunability of a parameter in an attribute corresponding to an entity of an entity type is modified from tunable to non-tunable, the information of the entity (such as the position, etc. ) is need to be modified) of the parameters of the attribute of the entity, etc. Meanwhile, the tuned and updated parameters are fed back to a graph construction module to complete dynamic adjustment, so as to realize the cyclic tuning of a knowledge graph.

Optionally, the knowledge graph unit may further include a shallow analysis module. The shallow analysis module mainly determines the endogenous factors of the wireless communication network, wherein the endogenous factors are constituted by indicators and data fields specified therein through wireless communication network protocol specifications such as the 3GPP communication protocols or in combination with the expert knowledge in the field of communications, and determines the plurality of entity types and the plurality of inter-entity relationships based on the endogenous factors of the wireless communication network; the endogenous factors mainly include the indicators and the data fields specified by the wireless communication network protocols, that is to say, the indicators and the data fields involved in the wireless communication network are sorted to determine an initial element of the entity library. For example, the indicators includes a Radio Resource Control (RRC) connection establishment success rate, a handover success rate, an uplink/downlink packet loss rate, etc.; the data fields include a sub-carrier spacing, an uplink/downlink time slot ratio, a maximum downlink modulation per second, etc. Each element in the entity library may be used as one entity; and the entity includes the entity attributes that may represent an entity object characteristic parameter, such as the name, the type, the word length, the communication layer to which the entity belongs, the value range, the tunability, etc. of the entity. In addition, the shallow analysis module further classifies various indicators (e.g., the RRC connection establishment success rate, the handover success rate, the uplink/downlink packet loss rate, etc.) and data fields (e.g., the sub-carrier spacing, the uplink/downlink time slot ratio, the maximum downlink modulation per second, etc.), and determines the entity types of the elements (i.e., various entities) in the entity library, denoted as [entity1, entity2,..., entitym], with m entity types in total, where each entity belongs to one of the m entity types. For the entities defined, shallow analysis is performed on the correlations between the entities, relationships among the plurality of entities are established according to analysis results of the correlations between the indicators and the data field by the shallow analysis module. The determined relationships among the plurality of entities constitute the initialized inter-entity relationship library. The inter-entity relationship library includes two entities associated, and inter-entity relationships. The inter-entity relationships may be recorded as [relation1, relation2,..., relationn], with n inter-entity relationships in total, and the relationship between any two entities belongs to one of the n entity relationships. Furthermore, according to the characteristics of the endogenous factors, in a process of further analyzing the wireless communication network data, if any one or more of: the new entities, the new entity types, and the new entity attributes appears, the entity library is updated; if a new inter-entity relationship appears, the inter-entity relationship library is updated; if any one or more of: the new entities, the new entity types, the new entity attributes, as well as the inter-entity relationship appear at the same time, the entity library and the inter-entity relationship library are updated at the same time.

Optionally, the knowledge graph unit may further include the graph construction module. The graph construction module is mainly configured to construct one wireless communication network knowledge graph having a topological structure. A universal triple (head, relation, tail) of the wireless communication network is constructed according to the initialized entity library and the initialized inter-entity relationship library; the head is a head entity in the triple; the tail is a tail entity in the triple; the head entity and the tail entity in each triple both belong to one of the m entity types established in the entity library; and the relation is a relationship between the entities, and belongs to one of the n relationships established in the inter-entity relationship library. Then, the wireless communication network knowledge graph is constructed, and the head entity and the tail entity in the triple are respectively used as nodes of the wireless communication network knowledge graph. If there is a clear pointing relationship between the nodes, a directed line segment is used for connection, otherwise an undirected line segment is used for connection. All nodes having an edge connection relationship are connected, such that the wireless communication network knowledge graph having the topological structure may be obtained, the wireless communication network knowledge graph is generally a multi-relational graph.

Optionally, in the embodiment of the present disclosure, entity types of elements in the entity library comprise one or more of: a network-level performance evaluation indicator, a user-level performance evaluation indicator, a general non-tunable data parameter, and a tunable data parameter; entity relationships in the inter-entity relationship library comprise one or more of: a causal relationship, an implicit relationship, and an explicit relationship.

As at least one alternative, in order to describe the entity library of the present disclosure more clearly, during initialization, it is determined that the entity types of elements in the entity library include one or more of: the network-level performance evaluation indicator, the user-level performance evaluation indicator, the general non-tunable data parameter, and the tunable data parameter, and definitely, there may be other entity types. Meanwhile, the entities also include entity attributes such as the communication layers, types, tunability, parameter values, etc. of entity objects. Moreover, when the inter-entity relationship library is initialized, it is determined that the inter-entity relationships may generally be divided into one or more of: the causal relationship, the implicit relationship, and the explicit relationship, and definitely, there may be other inter-entity relationships. The causal relationship describes a direct effect between two entities, e.g., a physical layer transmission rate and physical layer throughput; the implicit relationship describes an indirect effect between two entities, and no clear and specific expression may indicate a relationship between the two entities, e.g., the relationship between the maximum downlink modulation and physical layer throughput; and the explicit relationship describes that a specific analytical expression of the two entities may be obtained after inferential analysis, e.g., the relationship between a reference signal receiving power of Beam 1 and a synchronous signal receiving power. The above are merely exemplary descriptions and do not limit the specific classification of the entity types and the specific classification of the inter-entity relationships in the present disclosure. In fact, in the present disclosure, more classifications of the entity types may be included, and more classifications of the inter-entity relationships may also be included, which may all be dynamically determined based on the endogenous factors of the wireless communication network.

Optionally, in the embodiment of the present disclosure, the intelligent traceability unit comprises an anomaly detection module and an intelligent reasoning module.

The anomaly detection module is configured to perform anomaly detection on the wireless communication network based on the tuned wireless communication network knowledge graph in combination with the anomaly detection algorithm, so as to determine a fault type.

The intelligent reasoning module is configured to determine, based on the fault type and the intelligent reasoning algorithm, one or more entities to which the fault type belongs in the wireless communication network knowledge graph.

As at least one alternative embodiment, the system for intelligently analyzing and applying the wireless communication network knowledge graph further includes the intelligent traceability unit.

(2) The intelligent traceability unit includes the anomaly detection module and the intelligent reasoning module.

The anomaly detection module is mainly configured to perform anomaly detection on the wireless communication network based on the anomaly detection algorithm and the tuned wireless communication network knowledge graph, and complete preliminary detection of the fault type when a network anomaly is found, i.e., analyze which type of entities or which part of a graph structure or which part of the inter-entity relationship is anomalous, including nodes (entities), edges (inter-entity relationships), sub-graph structures (entities need to be added or deleted) with anomalies, etc., so as to indicate a direction for subsequent root cause tracing.

Optionally, in the embodiment of the present disclosure, the fault type includes a fault corresponding to different elements in the entity library and a fault corresponding to different elements in the inter-entity relationship library. The fault corresponding to different elements in the entity library, i.e., a fault corresponding to different entities, mainly refer to which type of the entities is anomalous. The fault corresponding to different elements in the inter-entity relationship library mainly refer to which part of the graph structure or inter-entity relationship is anomalous, or which part of the graph structure and inter-entity relationship is anomalous.

The intelligent reasoning module is mainly configured to determine one or more entities to which the fault type belongs, and the attributions of the determined one or more entities.

Optionally, in the embodiment of the present disclosure, determining, based on the fault type and the intelligent reasoning algorithm, the one or more entities to which the fault type belongs in the wireless communication network knowledge graph includes the following operations.

One or more entities to which the fault type belongs are determined, wherein the entity is a specific element in the entity library.

A position, a tunability, and an influence factor of the entity are determined based on attributes of the entity, wherein the position includes a specific communication layer in which the entity is located or a position at which the entity is located, and the influence factor is an influence level of the entity and other entities having an inter-entity relationship with the entity on the entity.

As at least one alternative embodiment, the intelligent reasoning module uses the fault types obtained by the anomaly detection module as inputs; and according to the constructed wireless communication network knowledge graph and the endogenous factor correlations of the wireless communication network knowledge, root cause tracing of problems affecting the performance of the wireless communication network is completed by means of artificial intelligence methods such as an approximate reasoning method, a causal inference method, etc., i.e., which indicators or data fields at which layer cause unusual fluctuations in the corresponding indicators are deeply excavated, thereby a specific entity type of the entity is determined. There may be one or more fault types, and there may also be one or more corresponding entities. Which data fields are tunable parameters are screened according to the entity attributes to which the entity belongs; and specific causes (e.g., wireless channel fading, network congestion, etc.) of changes in these indicators or data fields are reasoned; and other entities associated with the entity are determined according to the inter-entity relationships, and which data fields of the associated entity are tunable parameters, as well as the specific causes of changes in these indicators or data fields, are reasoned by using the same method.

Optionally, in the embodiment of the present disclosure, the tuning strategy unit comprises a strategy generation module and a strategy decision module.

The strategy generation module is configured to determine the plurality of tuning strategies for the wireless communication network based on one or more entities to which a fault type belongs in the wireless communication network knowledge graph, and the strategy generation algorithm.

The strategy decision module is configured to, based on the intelligent decision algorithm, determine the one optimal tuning strategy by using the best result when considering the execution efficiency and the execution effect of the tuning strategy as the target, so as to optimize the wireless communication network.

As at least one alternative embodiment, the system for intelligently analyzing and applying the wireless communication network knowledge graph further includes the tuning strategy unit.

(3) The tuning strategy unit includes the strategy generation module and the strategy decision module. For example, the strategy generation module determines the plurality of tuning strategies of the wireless communication network based on the diagnostic positioning result and the strategy generation algorithm.

The strategy generation module mainly uses the diagnostic positioning result of the intelligent reasoning module as an input, when the position, the tunability, and the influence factor to which the data field causing fluctuations in performance indicators belongs are specified, uses the strategy generation algorithm to provide the plurality of possible tuning strategies of the wireless communication network, including which data field parameters and adjustment directions of the data field parameters may be adjusted. In view of the complexity of the wireless communication network, such tuning strategies are often not unique.

Optionally, in the embodiment of the present disclosure, the plurality of tuning strategies of the wireless communication network all include specific tunable parameters and values for the tunable parameters adjustment.

That is, the tuning strategies of the wireless communication network may include specific tunable data parameters, and values to be adjusted for the tunable parameters.

The strategy decision module uses the plurality of the feasible tuning strategies of the wireless communication network provided by the strategy generation module as inputs, and according to the intelligent decision algorithm, selects and issues one optimal strategy to the wireless communication network for execution by comprehensively considering the best execution efficiency and the best execution effect of the tuning strategies, so as to realize network tuning.

Optionally, in the embodiment of the present disclosure, the intelligent decision algorithm includes one or more of: a Deep Reinforcement Learning (DRL) algorithm, a Markov Decision Process (MDP) algorithm, a biology imitation algorithm, and a statistical learning algorithm.

The strategy decision module constructs an intelligent decision model (algorithm) based on theories such as artificial intelligence, the DRL algorithm, the MDP algorithm, the biology imitation algorithm, and/or the statistical learning algorithm, uses the various tuning strategies of the wireless communication network generated through the strategy generation module as inputs, uses the intelligent decision algorithm, comprehensively considers the execution efficiency and the execution effect of the tuning strategies, and determines a weighted result corresponding to each tuning strategy based on weights respectively corresponding to the execution efficiency and the execution effect of the tuning strategies, and selects one tuning strategy of the wireless communication network as a final decision strategy. Considering the advantages of the above various algorithms, the most appropriate one algorithm or a combination of several algorithms is determined as the intelligent decision algorithm.

Optionally, in the embodiment of the present disclosure, the system for intelligently analyzing and applying the wireless communication network knowledge graph further includes a wireless data unit. The wireless data unit is configured to acquire raw data of the wireless communication network, perform pre-processing on the raw data, and then perform classification storage on the preprocessed data according to different data types, wherein the classification storage of different data types is implemented based on a distributed system architecture.

As at least one alternative embodiment, the system for intelligently analyzing and applying the wireless communication network knowledge graph further includes the wireless data unit.

(4) The wireless data unit mainly performs collection and pre-processing on the raw data of the wireless communication network, wherein the pre-processing includes data format conversion, data cleaning, etc.; and performs classification storage according to different types.

Data collection includes collecting the raw data of the wireless communication network by methods such as a soft collection method or a hard collection method, etc.; the soft collection method mainly refers to data collection realized by software such as a computer program; and the hard collection method is mainly to collect raw data of different wireless communication interfaces.

The data format conversion is mainly to convert formats of different data in the wireless communication network into a unified and recognizable format, or convert a format that may be recognized by a unit into a format that may be recognized or processed by a next processing unit connected with the unit.

The data cleaning mainly refers to deleting obvious abnormal data, etc.

Optionally, in the embodiment of the present disclosure, the wireless data unit includes a data collection module; and the data collection module is constructed based on a distributed system.

As at least one alternative embodiment, the distributed system may implement distributed storage and processing of the wireless communication network data, and in particular, may implement storage and processing of large amount of data, thereby providing an efficient and reliable processing and storage mode. For example, in an ES Hadoop distributed system infrastructure, the Hadoop implements a Hadoop Distributed File System (HDFS). The HDFS has a high degree of fault tolerance, and is designed to be deployed on cheap hardware. Furthermore, the HDFS provides a high transmission rate to access application program data, and thus is suitable for application programs having extremely large datasets. The HDFS broadens requirements of a Portable Operating System Interface (POSIX), such that data in a file system may be accessed in the form of flow. The Hadoop can perform distributed processing on the large amount of data, and is processed in a reliable, efficient and scalable manner. The reliability of the Hadoop is mainly based on the assumption of the Hadoop that computing elements and storage may fail, and thus maintains a plurality of operational data copies, so as to ensure that processing can be redistributed in response to failed nodes. The efficiency of the Hadoop is mainly based on the fact that the Hadoop operates in a parallel manner, which speeds up the processing through parallel processing. The scalability of the Hadoop is mainly based on the fact that the Hadoop can process Petabyte (PB, unit of storage)-level data. In addition, the Hadoop depends on a community server, which is relatively low in cost, and thus may be used by anyone.

Optionally, in the embodiment of the present disclosure, the different data types include one or more of: terminal-side wireless air interface data, base station-side wireless air interface data, core network data, and network management data.

The data collected may generally include four data types, but is not limited to the four data types of data. The first data type is the terminal-side wireless air interface data, which mainly includes L1, L2, and L3 layer data; the second data type is the base station-side wireless air interface data, which mainly includes L1, L2, and L3 layer data; the third data type is the core network data, which mainly includes two data types: user plane data and control plane data; and the fourth data type is the network management data, which mainly includes an alarm, configuration, and performance information. It is to be understood that the above listed types of the wireless communication network data are only exemplary descriptions, and the present disclosure is not limited thereto. All data transmitted between network elements in the wireless communication network as well as air interface data in the related art fall within the scope of protection of the present disclosure.

The alarm is mainly alarm for alarming anomalies in node data of the wireless communication network, for example, an alarm for alarming relatively large load on the node data of the wireless communication network, or anomalies in some nodes of the wireless communication network.

The configuration mainly refers to the configuration information of various nodes in the wireless communication network.

The performance information mainly refers to network-level performance information and user-level performance information in the wireless communication network.

Optionally, in the embodiment of the present disclosure, the system for intelligently analyzing and applying the wireless communication network knowledge graph further includes a performance evaluation unit. The performance evaluation unit is configured to determine, based on the tuned wireless communication network in combination with a tuning strategy and intelligent algorithm evaluation model, improvement degrees on a network-level performance and a user-level performance of the wireless communication network improved by the tuning strategy, and a comprehensive capability evaluation result of an intelligent algorithm used by each unit, and feeding same back to a corresponding unit.

Optionally, in the embodiment of the present disclosure, the performance evaluation unit includes a network-level performance evaluation module and a user-level performance evaluation module.

The network-level performance evaluation module and the user-level performance evaluation module are configured to acquire data of the tuned wireless communication network; determine the improvement degrees on a performance of the wireless communication network improved by the tuning strategy in two dimensions of a network-level performance evaluation and a user-level performance evaluation; based on the improvement degrees and the comprehensive capability evaluation result of the intelligent algorithm, determine an intelligent algorithm that needs to be adjusted, the intelligent algorithm that needs to be adjusted includes one or more of: a deep analysis algorithm, the anomaly detection algorithm, the intelligent reasoning algorithm, the strategy generation algorithm, and the intelligent decision algorithm.

As at least one alternative embodiment, the system for intelligently analyzing and applying the wireless communication network knowledge graph further includes the performance evaluation unit.

(5) The performance evaluation unit includes the network-level performance evaluation module and the user-level performance evaluation module.

The performance evaluation unit mainly has two inputs. The first input are algorithm strategies which are used by modules in the knowledge graph unit, the intelligent traceability unit, and the tuning strategy unit, and related outputs. For example, the algorithm strategies include the tuning strategies selected by the strategy decision module to be issued to the wireless communication network for execution, etc.. The second input is real-time data in the wireless communication network after the tuning strategies are executed. The performance evaluation unit mainly evaluates the entire system in two directions of the network-level performance evaluation and the user-level performance evaluation, so as to determine the corresponding improvement degrees, i.e., determines whether the tuned wireless communication network is improved before being tuned, whether the corresponding network-level performance or the corresponding user-level performance is improved or not, and what the specific level of increase or decrease is. An effectiveness, a real-time performance, and a robustness of the selected tuning strategy need to be evaluated, including whether the performance of the entire wireless communication network and QoE of users after a tuning solution is executed are enhanced and improved (for example, whether network delay or an uplink/downlink packet loss rate reduces, or whether an RRC connection establishment success rate increases). Next, the intelligent algorithms used in each module are evaluated, including the algorithm generalization ability, the scalability and the interpretability, etc. are evaluated. With the development of a wireless communication network technology, an evaluation system also needs to be constantly updated, and evaluation objects and evaluation methods are expanded and improved continuously.

In another aspect, the performance evaluation unit feeds the comprehensive capability evaluation results back to the corresponding modules in the knowledge graph unit, the intelligent traceability unit, and the tuning strategy unit; the modules perform tuning and optimization on method used by the modules themselves and output results according to the feed back evaluation results in combination with corresponding performance evaluation criteria, so as to realize dynamic network tuning. For example, the feed back evaluation results indicate that the tuning strategy selected by the strategy decision module is poor in effect, and the strategy decision module may re-select the tuning strategy by changing the intelligent decision algorithm.

Optionally, in the embodiment of the present disclosure, based on the improvement degrees and the comprehensive capability evaluation result of the intelligent algorithm, determining the intelligent algorithm that needs to be adjusted includes the following operations.

If the improvement degrees of the network-level performance and/or the user-level performance are/is not changed or decreased after the optimal tuning strategy is performed, the comprehensive capability evaluation result of the intelligent algorithm used by each unit is determined.

Based on the comprehensive capability evaluation result of the intelligent algorithm used by each unit, in combination with a corresponding evaluation criteria, the intelligent algorithm that needs to be adjusted is determined and updated.

As at least one alternative embodiment, after the optimal tuning strategy is executed on the wireless communication network, the performance evaluation unit evaluates the improvement degrees of the performance of the wireless communication network from both the network-level performance and the user-level performance perspectives respectively, and if the evaluation results show that there is no improvement, even a reduction occurs instead, the performance evaluation unit determines the comprehensive capability evaluation result of the intelligent algorithm used by each unit.

The method for determining the comprehensive capability evaluation result of the intelligent algorithm used by each unit includes: performing comprehensive evaluation on the algorithm generalization ability, the scalability, the interpretability, etc. of the intelligent algorithms used by all the units or modules, determining the comprehensive capability evaluation result of the algorithm, and determining and updating the intelligent algorithm that needs to be adjusted in combination with the evaluation criteria. There may be one or more intelligent algorithms that need to be adjusted, i.e., the corresponding one or more units or modules need to adjust the intelligent algorithms.

Based on the intelligent algorithms updated by the corresponding modules or units, a new optimal tuning solution is determined and executed again. If the comprehensive capability evaluation results of the intelligent algorithms of all the units or modules are basically the same, other sub-optimal solutions are selected from the plurality of tuning solutions for execution. If the comprehensive capability evaluation results of the intelligent algorithms of all the units or modules are lower than that before tuning, the step of determining the optimal tuning solution continues to be repeated.

It is to be noted that, the performance evaluation unit in combination with the knowledge graph unit, the intelligent traceability unit, and the tuning strategy unit may constitutes an intelligent decision closed-loop, and the data and related information of the wireless communication network may be directly inputted into the knowledge graph unit and the performance evaluation unit; or in order to guarantee the effectiveness of the wireless communication network data and improve the implementation efficiency of the system, a wireless data unit is added to pre-process the wireless communication network data and then input same to the knowledge graph unit and the performance evaluation unit, which constitutes one intelligent decision closed-loop as well. That is, the system for intelligently analyzing and applying the wireless communication network knowledge graph provided in the present disclosure may include various implementation modes, and may include the knowledge graph unit, the intelligent traceability unit, and the tuning strategy unit; and after the determined optimal tuning strategy is executed on the wireless communication network, the tuned wireless communication network is inputted to the knowledge graph unit, so as to update and adjust the wireless communication network knowledge graph. The system for intelligently analyzing and applying the wireless communication network knowledge graph may further include the knowledge graph unit, the intelligent traceability unit, the tuning strategy unit, and the performance evaluation unit; and after the optimal tuning strategy for the wireless communication network is determined, the performance evaluation unit determines the degrees of improvement in network-level performance and user-level performance of the wireless communication network by the tuning strategy, and the comprehensive capability evaluation result of the intelligent algorithm used by each unit, and then feeds back same to the corresponding units. The system for intelligently analyzing and applying the wireless communication network knowledge graph may further include the knowledge graph unit, the intelligent traceability unit, the tuning strategy unit, and the wireless data unit, or may further include the knowledge graph unit, the intelligent traceability unit, the tuning strategy unit, performance evaluation unit, and the wireless data unit.

According to the system for intelligently analyzing and applying the wireless communication network knowledge graph provided in the present disclosure, the wireless data unit acquires and stores the related data of the wireless communication network, the wireless communication network knowledge graph is preliminarily constructed in combination with communication expert knowledge and 3GPP communication protocols, deep analysis of the correlations between the endogenous factors is performed, the tuning and updating of the graph are completed by using analysis results. After a network communication anomaly is found, root cause tracing and diagnostic positioning are performed by using the intelligent reasoning module, the strategy generation module is configured to provide the plurality of feasible tuning solutions, and then the strategy decision module selects and issues one specific solution to the wireless communication network for being execution, and finally, the performance evaluation module is configured to evaluate tuning strategy execution results and comprehensive capability of the intelligent algorithms, so as to complete the intelligent decision closed-loop, thereby effectively improving the performance of the wireless communication network and the QoE of users.

Fig. 2 is a flowchart of a method for intelligently analyzing and applying a wireless communication network knowledge graph according to the present disclosure. As shown in Fig. 2, the method includes the following steps.

At S201, the wireless communication network knowledge graph is constructed based on endogenous factors of a wireless communication network and a graph construction method, and deep analysis and graph cyclic tuning are performed in combination with classified wireless communication network data.

At S202, a diagnostic positioning result for the wireless communication network anomaly is determined based on the tuned wireless communication network knowledge graph, an anomaly detection algorithm and an intelligent reasoning algorithm.

At S203, a plurality of tuning strategies are determined based on a strategy generation algorithm and the diagnostic positioning result, and one optimal tuning strategy is determined from the plurality of tuning strategies by using a best result when considering an execution efficiency and an execution effect of a tuning strategy as a target, in combination with an intelligent decision algorithm, so as to perform tuning on the wireless communication network.

As at least one alternative embodiment, the method for intelligently analyzing and applying the wireless communication network knowledge graph provided in the present disclosure includes the following operations.

Graph construction and tuning is mainly to determine the endogenous factors of the wireless communication network, wherein the endogenous factors are constituted by indicators and data fields specified by the wireless communication network protocols such as 3GPP communication protocols or in combination with expert knowledge in the field of communications; and determine the plurality of entity types and the plurality of inter-entity relationships based on the endogenous factors of the wireless communication network; the endogenous factors mainly includes indicators and data fields specified by wireless communication network protocols. That is to say, the indicators and the data fields involved in the wireless communication network are sorted to determine an initial element of the entity library, for example, an RRC connection establishment success rate, a handover success rate, an uplink/downlink packet loss rate, a sub-carrier spacing, an uplink/downlink time slot ratio, a maximum downlink modulation per second, etc. Furthermore, analysis is performed according to the correlations between the various indicators and the data fields, so as to determine an initial element of the inter-entity relationship library, and according to the characteristics of the endogenous factors, in a process of further analyzing the wireless communication network data, if any combination of the new entities, the new entity types, and the new entity attributes appears, the entity library is updated; if a new inter-entity relationship appears, the inter-entity relationship library is updated; if any combination of the new entities, the new entity types, and the new entity attributes, as well as the inter-entity relationship, appear at the same time, the entity library and the inter-entity relationship library are updated at the same time. Therefore, parameters of the wireless communication network knowledge graph that need to be tuned are determined.

According to the characteristics of the endogenous factors, the wireless communication network data is further analyzed, and in order to guarantee the effectiveness of the wireless communication network data, raw data of the wireless communication network needs to be pre-processed, and details include the following.

Data collection includes collecting the raw data of the wireless communication network by methods such as a soft collection method and a hard collection method, etc.; the soft collection method mainly refers to data collection realized by software such as a computer program; and the hard collection method is mainly to collect raw data of different wireless communication interfaces.

Data format conversion is mainly to convert formats of different data in the wireless communication network into a unified and recognizable format, or convert a format that may be recognized by a unit into a format that may be recognized or processed by a next processing unit connected with the unit.

Data cleaning mainly refers to deleting obvious abnormal data, etc.

Intelligent traceability is to complete preliminary detection of the fault type by the tuned wireless communication network knowledge graph in combination with the anomaly detection algorithm, i.e., analyze which type of entities or which part of a graph structure or which part of the inter-entity relationship is anomalous. In combination with the intelligent reasoning algorithm, the diagnostic positioning result of the wireless communication network anomaly is determined, i.e., one or several entities with fault or inter-entity relationships with fault are specifically determined.

Tuning strategy: a plurality of tuning strategies of the wireless communication network are generated by using the strategy generation algorithm according to the diagnostic positioning result. In view of the complexity of the wireless communication network, such tuning strategies are often not unique. Based on the intelligent decision algorithm, one optimal tuning strategy is determined by using the best result when considering the execution efficiency and the execution effect of the tuning strategy as a target, so as to perform tuning on the wireless communication network.

Optionally, the method for intelligently analyzing and applying the wireless communication network knowledge graph may further include: based on the tuned wireless communication network and in combination with a tuning strategy and intelligent algorithm evaluation model, improvement degrees of a network-level performance and a user-level performance of the wireless communication network by the tuning strategy are determined, and a comprehensive capability evaluation result of each intelligent algorithm used is determined.

Details include the performance evaluation., According to the tuned wireless communication network data, the improvement degrees of the wireless communication network in the two dimensions of the network-level performance evaluation and the user-level performance evaluation, as well as the comprehensive capability evaluation results of the intelligent algorithms used in all the above steps, are evaluated, so as to determine which intelligent algorithm used in which step specifically needs to be adjusted, and then the intelligent algorithm that needs to be adjusted is updated; based on the updated intelligent algorithm, the above step is repeated to generate a new tuning strategy for execution, and performance evaluation is performed again on the wireless communication network, so as to determine the improvement degrees of the entire wireless communication network in the two dimensions of the network-level performance evaluation and the user-level performance evaluation.

According to the method for intelligently analyzing and applying the wireless communication network knowledge graph provided in the present disclosure, through the endogenous factors of the wireless communication network, the wireless communication network knowledge graph is preliminarily constructed in combination with the communication expert knowledge and the 3GPP communication protocols, deep analysis of the correlations between the endogenous factors is performed, the tuning and updating of the graph are completed by using analysis results, after a network communication anomaly is found, root cause tracing and diagnostic positioning are performed by using the intelligent reasoning module, the strategy generation module is configured to provide the plurality of feasible tuning strategies, and then the strategy decision module selects and issues one specific strategy to the wireless communication network for being execution, so as to cyclically tune the wireless communication network, such that the performance of the wireless communication network and the QoE of users are effectively improved.

Optionally, constructing the wireless communication network knowledge graph based on the endogenous factors of the wireless communication network and the graph construction method, and performing deep analysis and graph cyclic tuning in combination with the classified wireless communication network data includes the following operations.

Based on a graph model analysis algorithm and a data model analysis algorithm, new relationships among various entities in the wireless communication network knowledge graph are determined, association degrees of the relationships among the various entities are analyzed, the inter-entity relationship library is updated; and/or, one or more of: new entities, new entity types, and new entity attributes in the wireless communication network knowledge graph are determined, so as to update the entity library.

The wireless communication network knowledge graph is updated based on the updated entity library and/or the updated inter-entity relationship library.

The entity library and the inter-entity relationship library are determined based on the endogenous factors of the wireless communication network, wherein the endogenous factors of the wireless communication network includes indicators and data fields specified by wireless communication network protocols.

Optionally, determining the diagnostic positioning result for the wireless communication network anomaly based on the tuned wireless communication network knowledge graph and the anomaly detection and the intelligent reasoning algorithms includes the following operations.

Anomaly detection is performed on the wireless communication network based on the tuned wireless communication network knowledge graph and the anomaly detection algorithm, so as to determine a fault type.

One or more entities to which the fault type belongs in the wireless communication network knowledge graph are determined based on the fault type and the intelligent reasoning algorithm.

Optionally, determining the plurality of tuning strategies based on the strategy generation algorithm and the diagnostic positioning result, and determining, in combination with the intelligent decision algorithm, the one optimal tuning strategy from the plurality of tuning strategies by using the best result when considering the execution efficiency and the execution effect of the tuning strategy as the target, so as to perform tuning on the wireless communication network includes the following operations.

The plurality of tuning strategies of the wireless communication network are determined based on one or more entities to which a fault type belongs in the wireless communication network knowledge graph, and the strategy generation algorithm.

Based on the intelligent decision algorithm, the one optimal tuning strategy is determined by using the best result when considering the execution efficiency and the execution effect of the tuning strategy as the target, so as to perform tuning on the wireless communication network.

Optionally, the method further includes the following operation.

Based on the tuned wireless communication network and in combination with an tuning strategy and intelligent algorithm evaluation model, improvement degrees on a network-level performance and a user-level performance of the wireless communication network by the tuning strategy, and a comprehensive capability evaluation result of each intelligent algorithm used, are determined.

Optionally, based on the tuned wireless communication network and in combination with the tuning strategy and intelligent algorithm evaluation model, determining the improvement degrees on the network-level performance and the user-level performance of the wireless communication network by the tuning strategy, and the comprehensive capability evaluation result of each intelligent algorithm used includes the following operations.

Data of the tuned wireless communication network is acquired.

The improvement degrees on a performance of the wireless communication network by the tuning strategy in two dimensions of a network-level performance evaluation and a user-level performance evaluation are determined.

Based on the improvement degrees and the comprehensive capability evaluation result of the each intelligent algorithm, an intelligent algorithm that needs to be adjusted is determined, wherein the intelligent algorithm that needs to be adjusted includes one or more of: a deep analysis algorithm, the anomaly detection algorithm, the intelligent reasoning algorithm, the strategy generation algorithm, and the intelligent decision algorithm.

Optionally, before constructing the wireless communication network knowledge graph based on the endogenous factors of the wireless communication network and the graph construction method, and performing deep analysis and graph cyclic tuning in combination with the classified wireless communication network data, the method further includes the following operation.

Raw data of the wireless communication network is acquired, pre-processing on the raw data is performed, and then classification storage on the preprocessed data is performed according to different data types, wherein the classification storage of different data types is implemented based on a distributed system architecture.

Optionally, the different data types include one or more of: terminal-side wireless air interface data, base station-side wireless air interface data, core network data, and network management data.

Optionally, entity types of elements in the entity library comprise one or more of: a network-level performance evaluation indicator, a user-level performance evaluation indicator, a general non-tunable data parameter, and a tunable data parameter; entity relationships in the inter-entity relationship library comprise one or more of: a causal relationship, an implicit relationship, and an explicit relationship.

Optionally, determining the new relationships among various entities in the wireless communication network knowledge graph, analyzing the association degrees of the relationships among the various entities, and updating the inter-entity relationship library based on a graph model analysis algorithm and a data model analysis algorithm, and/or determining one or more of: new entities, new entity types, and new entity attributes in the wireless communication network knowledge graph, and updating the entity library includes the following operation.

Quantitative measurements of the association degrees of the relationships among the various entities in the wireless communication network knowledge graph are determined based on the graph model algorithm, and the inter-entity relationship library is updated.

One or more of: the new entities, the new entity types, the new entity attributes, and the new relationships among the various entities in the wireless communication network knowledge graph are determined based on the acquired classified wireless communication network data, and the entity library and/or the inter-entity relationship library are/is updated.

Optionally, updating the wireless communication network knowledge graph based on the updated entity library and/or the updated inter-entity relationship library includes the following operations.

Parameters to be tuned are determined based on wireless communication network protocol specifications and theoretical analysis algorithms, and the updated entity library and/or the inter-entity relationship library, wherein the parameters to be tuned in the wireless communication network knowledge graph include one or more of: parameters of entities, parameters of entity attributes, and parameters of inter-entity relationships.

The wireless communication network knowledge graph is updated based on the parameters to be tuned.

Optionally, the fault type includes a fault corresponding to different elements in the entity library and a fault corresponding to different elements in the inter-entity relationship library.

Optionally, determining, based on the fault type and the intelligent reasoning algorithm, the one or more entities to which the fault type belongs in the wireless communication network knowledge graph includes the following operations.

One or more entities to which the fault type belongs are determined, wherein the entity is a specific element in the entity library.

A position, a tunability, and an influence factor of the entity are determined based on an attribute of the entity, wherein the position includes a specific communication layer in which the entity is located or a position at which the entity is located in a graph structure, and the influence factor is an influence degree of the entity and other entities having an inter-entity relationship with the entity on the entity.

Optionally, the plurality of the tuning strategies of the wireless communication network all include specific tunable parameters and values for tunable parameter adjustment.

Optionally, the intelligent decision algorithm includes one or more of: a DRL algorithm, an MDP algorithm, a biology imitation algorithm, and a statistical learning algorithm.

Optionally, based on the improvement degrees and the comprehensive capability evaluation result of the intelligent algorithm, determining the intelligent algorithm that needs to be adjusted includes the following operations.

If the improvement degrees of the network-level performance and/or the user-level performance are/is not changed or decreased after the optimal tuning strategy is performed, the comprehensive capability evaluation result of each intelligent algorithm is determined.

Based on the comprehensive capability evaluation result of each intelligent algorithm, in combination with a corresponding evaluation criteria, the intelligent algorithm that needs to be adjusted is determined and updated.

According to the method for intelligently analyzing and applying the wireless communication network knowledge graph provided in the present disclosure, by acquiring and storing the related data of the wireless communication network, the wireless communication network knowledge graph is preliminarily constructed in combination with the communication expert knowledge and the 3GPP communication protocol, deep analysis of the correlations between the endogenous factors is performed, the tuning and updating of the graph are completed by using analysis results. After a network communication anomaly is found, root cause tracing and diagnostic positioning are performed by using the intelligent reasoning module, the strategy generation module is configured to provide the plurality of feasible tuning strategies, and then the strategy decision module selects and issues one specific tuning strategy to the wireless communication network for being execution, and finally, the performance evaluation module is configured to evaluate tuning strategy execution results and comprehensive capability of the intelligent algorithms, so as to complete the intelligent decision closed-loop, thereby effectively improving the performance of the wireless communication network and the QoE of users.

The method for intelligently analyzing and applying the wireless communication network knowledge graph provided in the present disclosure is described below with specific examples.

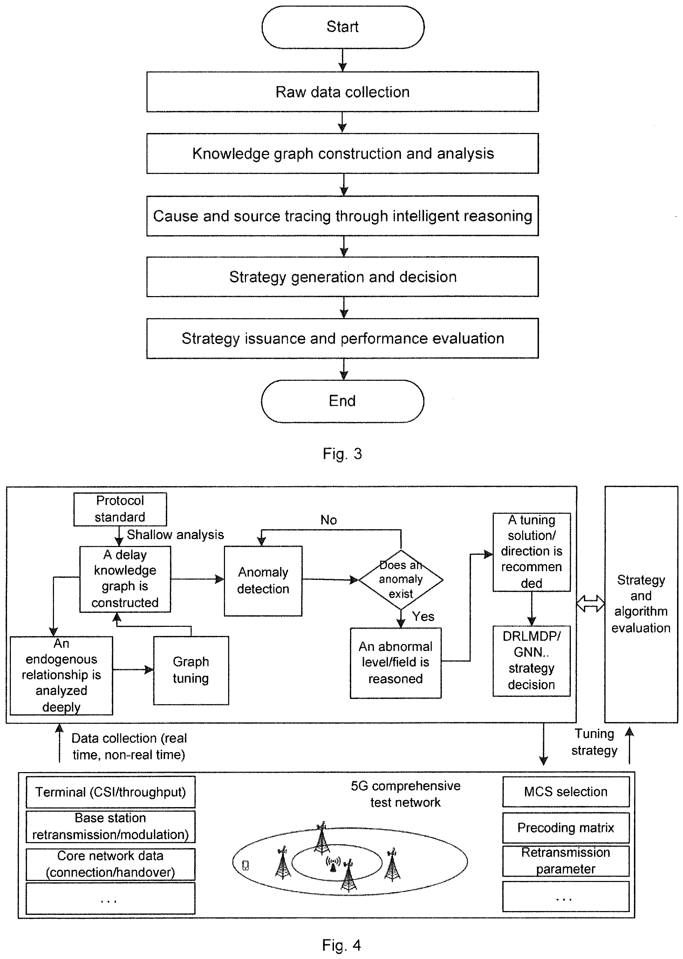

Fig. 3 is an overall flowchart of method for intelligently analyzing and applying the wireless communication network knowledge graph according to the present disclosure. As shown in Fig. 3, the overall flow includes the following steps.

Step I, raw data collection: a wireless data unit based on an ES-Hadoop distributed system is constructed; communication data in the wireless communication network is collected by means of soft/hard data collection, etc., the collected data is converted and cleaned, and then classified and stored according to different data types. The stored date is correspondingly pre-processed and is converted to subsequently available formats, wherein the data includes wireless air interface data (terminal-side and base station-side), core network data, and network management data.

Step II, knowledge graph construction and analysis: through the wireless communication network protocol (such as 3GPP communication protocols) specifications, or in combination with communication expert knowledge, indicators and data fields of the wireless communication network are first sorted as entity nodes of the wireless communication network knowledge graph, and the entity library is initialized. Generally, entity types may be classified into a network-level performance evaluation indicator, a user-level performance evaluation indicator, a general non-tunable data parameter, and a tunable data parameter. Meanwhile, the entities also include entity attributes such as the communication layers, types, tunability, parameter values, etc. of entity objects. If a new entity is found during subsequent deep analysis, the entity library is updated according to the new entity. Likewise, according to the protocol specifications or the communication expert knowledge, a relationship between the indicators, a relationship between the indicator and the data field, and a relationship between the data fields are determined; and a relationship between the entities determined based on the above relationships may generally be divided into a causal relationship, an implicit relationship, and an explicit relationship, and the inter-entity relationship library is initialized. If a new inter-entity relationship is found during subsequent deep analysis, the inter-entity relationship library is updated according to the new inter-entity relationship. The causal relationship describes a direct effect between two entities, e.g., the relationship between the physical layer transmission rate and the physical layer throughput; the implicit relationship describes an indirect effect between two entities, e.g., the relationship between the maximum downlink modulation and the physical layer throughput; and the explicit relationship describes that a specific analytical expression of the two entities may be obtained after inferential analysis, e.g., the relationship between the reference signal receiving power of Beam 1 and the synchronous signal receiving power.

According to the established relationship between the entities, a universal triple (i.e., a head entity, a relation, and a tail entity) of the wireless communication network is constructed. The triple acts as a basic unit of the wireless communication network knowledge graph, the head entity and the tail entity are used as nodes in the knowledge graph, a directed line segment or an undirected line segment is used to represent a correlation between two nodes (entities), and the wireless communication network knowledge graph having a topological structure is preliminarily constructed.

In an aspect, according to the preliminarily-constructed wireless communication network knowledge graph, endogenous factor correlations between the nodes are deeply excavated by using a sparse node representation algorithm based on a graph model, and a cosine similarity calculation and node correlation analysis model, so as to complete quantification and measurement of an association degree between the nodes (entities). In another aspect, based on wireless communication network operating data collected and stored by the wireless data unit, data-driven deep analysis is performed on the wireless communication network knowledge graph, and by using the collected real-time data of the wireless communication network, the association degree and dependency relationship between the nodes (entities) in the wireless communication network knowledge graph are deeply analyzed. According to deep analysis results of the two aspects, the constructed wireless communication network knowledge graph is updated to realize the dynamic tuning of the graph.

Step III, root cause tracing through intelligent reasoning: anomaly detection is performed on the wireless communication network based on the tuned wireless communication network knowledge graph and in combination with the anomaly detection algorithm. When the performance of the wireless communication network and the QoE of users reduce, i.e., fluctuations of a part of the indicators in the knowledge graph exceed a preset threshold range; according to the constructed wireless communication network knowledge graph and the endogenous factor correlations thereof, by using artificial intelligence algorithms such as cluster analysis algorithm based on graph group detection, a graph neural network algorithm, an approximate reasoning algorithm, a causal inference algorithm, etc., reductive inference of causes of the fluctuations in the indicators is realized; and a process of root cause tracing of changes in network performance is completed by specifically positioning the entity attributes to which indicators or data fields located at which communication layer.

Step IV, strategy generation and decision: strategy generation and strategy decision are performed after an intelligent reasoning process. Detail is described as follows.

Strategy generation: key performance indicators causing a reduction in the network performance or user experience are obtained according to the diagnostic positioning result for the problem of the wireless communication network, and specific data fields and attributes (tunability, an adjustment range, etc.) thereof affecting the indicator are reasoned; and then, a plurality of possible network tuning strategies are provided by using the strategy generation algorithm according to the constructed wireless communication network knowledge graph and the endogenous factor correlations between the nodes (entities), wherein the plurality of possible network tuning strategies include tunable parameters to be adjusted and adjustment directions of the tunable parameters to be adjusted.

Strategy decision: an intelligent decision algorithm is constructed based on theories such as an artificial intelligence algorithm, a biology imitation algorithm, and a statistical learning algorithm, etc., such as a DRL algorithm and an MDP algorithm; the various network tuning strategies generated are used as inputs, and one wireless communication network tuning strategy is selected as a final decision strategy by using the intelligent decision algorithm by comprehensively considering the execution efficiency and the execution effect of the tuning strategies.

Step V, strategy issuance and performance evaluation: after intelligent decision, strategy issuance and performance evaluation are performed. Detail is described as follows.

Strategy issuance: the tuning strategy of the wireless communication network selected by the strategy decision module is issued to the wireless communication network, and adjustment is performed according to the tunable parameters corresponding to the strategy, so as to complete a network tuning process.

Performance evaluation: an intelligent evaluation model of the wireless communication network is established for a specific application scenario; after the final tuning strategy of the wireless communication network is performed, whether corresponding performance indicators are improved or reach an expected target and whether other indicators representing the performance of the wireless communication network are significantly affected are evaluated, and the effectiveness, the real-time performance, and the robustness of the tuning strategy of the wireless communication network are evaluated from both the network-level performance aspect and the user-level performance aspect; and at the same time, the comprehensive capability of the intelligent algorithms used by the modules is evaluated and the corresponding evaluation results are fed back to the strategy decision module, the strategy generation module, the intelligent reasoning module, and the deep analysis module, so as to allow the modules to adjust and optimize the method used by themselves and output results according to specific situations, thereby forming close-loop feedback.

Fig. 4 is a service flowchart of a method for intelligently analyzing and applying the wireless communication network knowledge graph according to the present disclosure. As shown in Fig. 4, the service flow uses a specific application in an ultra-reliable low-delay communication uRLLC scenario as an example. The flow approximately includes the following steps.

Step I, data is collected. According to requirements of embodiments, communication data in a comprehensive test network is collected by means of a soft data collection method or a hard data collection method, etc., then the collected data is converted, cleaned, classified and stored according to different data types, and subjected to format conversion. The data needs to be collected in this embodiment mainly includes wireless air interface data (e.g., a signal-to-noise ratio, throughput, etc. of a terminal) and core network data (N1/N2/N3, etc.).

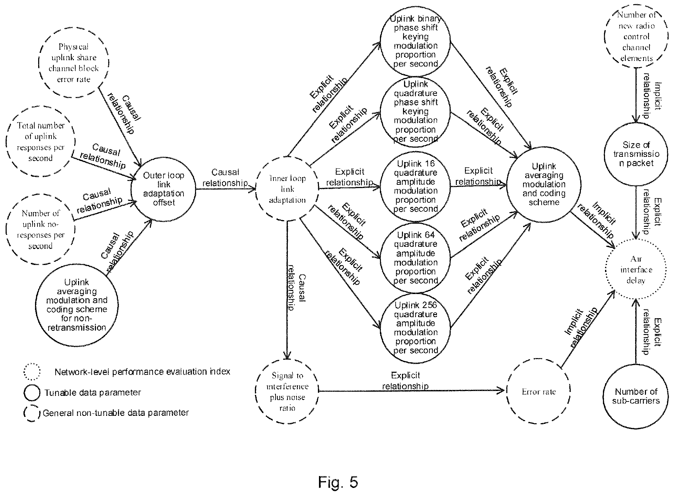

Step II, a knowledge graph is constructed. Through wireless communication network protocol (such as 3GPP communication protocols) specifications or in combination with an expert knowledge in the field of communications, the endogenous factors of the wireless communication network constituted by the indicators and the data fields specified therein is determined, the indicators and the data fields specified in the wireless communication network are sorted, and attributes such as communication layers, types, tunability, parameter values, etc. are clarified as entity nodes of the knowledge graph. The relationship between the entities is clarified; a triple (i.e., a head entity, a relation, and a tail entity) is constructed; and the wireless communication network knowledge graph having a topological structure is constructed. Fig. 5 shows a partial schematic diagram of an air interface delay knowledge graph. For example, an entity of which entity type is determined as a general non-tunable data parameter includes: a Physical Uplink Share Channel (PUSCH) block error rate, a total number of Uplink (UL) responses per second, the number of UL negative responses per second, and the number of New Radio (NR) Control Channel Elements (CCEs), and the entity type corresponding to Inner Loop Link Adaptation (ILLA) is the general non-tunable data parameter. An entity of which entity type is determined as a tunable data parameter includes: an Outer Loop Link Adaptation offset (OLLA offset), uplink averaging Modulation and Coding Scheme (MCS) for non-retransmission, uplink Binary Phase Shift Keying (BPSK) modulation proportion per second, uplink Quadrature Phase Shift Keying (QPSK) modulation proportion per second, uplink 16 Quadrature Amplitude Modulation (16QAM) proportion per second, uplink 64 Quadrature Amplitude Modulation (64QAM) proportion per second, and uplink 256 Quadrature Amplitude Modulation (256QAM) proportion per second. In combination with requirements of a scenario, in this embodiment, key indicators of the wireless communication network include a network delay of an air interface and a core network at various stages, and an error rate. The data field relates to the air interface and the core network data.

Step III, deep analysis and graph tuning are performed. Deep analysis is performed on the constructed wireless communication network knowledge graph. In an aspect, from the perspective of the graph model, a knowledge graph structure (e.g., nodes or edges) and endogenous factor correlations (inter-entity relationship) thereof are deeply excavated by using theoretical analysis algorithms; and in another aspect, on the basis of the collected and stored real-time data of a comprehensive test network, deep analysis is performed on the constructed wireless communication network knowledge graph by means of data driving. From the above two aspects, delay and the endogenous factor correlations between the nodes are deeply analyzed, for example, a signal-to-noise ratio, a modulation coding scheme selection, a network handover, etc. are deeply analyzed. Based on the deep analysis results, dynamic tuning is performed on the wireless communication network knowledge graph.

Step IV, detection and reasoning are performed. When fluctuations or anomalies occur in the KPIs in the performance of the wireless communication network, such as the problems that delay or the error rate suddenly increases, reductive inference is performed according to the constructed wireless communication network knowledge graph and the correlation between the nodes (inter-entity relationship) based on algorithms such as a graph neural network algorithm, an approximate reasoning algorithm, a causal inference algorithm, etc., so as to position the indicators or the data fields at which layer there is a problem. In this embodiment, the reductive inference is performed if the error rate is higher than 10-5 and the air interface delay is higher than 1 ms.

Step V, tuning is recommended. Based on association rules and the strategy generation and decision algorithm based on deep learning, a network parameter adjustment model is established by using the theoretical analysis algorithms and according to the constructed wireless communication network knowledge graph and the endogenous factor correlations between the nodes (entities), wherein the theoretical analysis algorithms include an artificial intelligence algorithm, the biology imitation algorithm, a statistical learning algorithm, etc.; and algorithm iteration and optimization are performed based on the collected data, adjustment parameters are solved, and by comprehensively considering the execution efficiency and the execution effect of the tuning strategies, the optimal wireless communication network tuning strategy is selected as the final tuning strategy of the wireless communication network.

Step VI, the tuning strategy of the wireless communication network selected by the strategy decision module is issued to the comprehensive test network, and adjustment is performed according to the tunable parameters corresponding to the strategies, so as to complete a network tuning process. For a uRLLC scenario, an intelligent evaluation model of the wireless communication network is constructed, after the final network tuning strategy is performed, whether corresponding KPIs are improved or reach an expected target (for example, whether the air interface delay reduces and the error rate decreases) and whether other indicators representing the performance of the wireless communication network are significantly affected are evaluated. And the evaluation results are fed back to the deep analysis module, the intelligent reasoning module, the strategy generation module, and the strategy decision module, so as to achieve further adjustment and optimization. In this embodiment, the issued tuning strategy includes Media Access Control (MAC) and physical layer parameters, such as MCS, a beamforming matrix, etc.

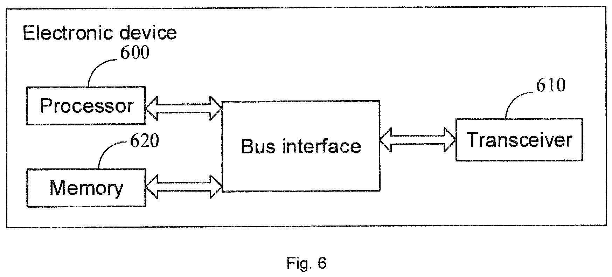

Fig. 6 is a schematic structural diagram of an electronic device according to the present disclosure. As shown in Fig. 6, the electronic device includes a memory 620, a transceiver 610, and a processor 600. The processor 600 and the memory 620 may be separately arranged physically.

The memory 620 is configured to store a computer program. The transceiver 610 is configured to receive and send data under the control of the processor 600.

Specifically, the transceiver 610 is configured to receive and send the data under the control of the processor 600.

In Fig. 6, a bus architecture may include any number of interconnected buses and bridges, and is specifically formed by linking various circuits together by one or more processors, represented by the processor 600, and a memory, represented by the memory 620. The bus architecture may also connect various other circuits such as periphery devices, voltage regulators, and power management circuits together, all of which are well known in the art and therefore will not be further described in the present application. A bus interface provides an interface. The transceiver 610 may be a plurality of elements, i.e., includes a sender and a receiver, and provides units configured to communicate with various other apparatuses on transmission media. These transmission media include transmission media such as wireless channels, wired channels, cables, etc.

The processor 600 is responsible for managing the bus architecture and general processing. The memory 620 may be configured to store data used by the processor 600 during execution of operations.

The processor 600 may be a Central Processing Unit (CPU), an Application Specific Integrated Circuit (ASIC), a Field-Programmable Gate Array (FPGA), or a Complex Programmable Logic Device (CPLD), or the processor may use a multi-core architecture.

The processor 600 is configured to execute any one of the methods provided in the embodiments of the present application according to obtained executable instructions by calling the computer program stored in the memory 620. For example, the method includes the following operations.

The wireless communication network knowledge graph is constructed based on endogenous factors of a wireless communication network and a graph construction method, and deep analysis and graph cyclic tuning are performed in combination with classified wireless communication network data.

A diagnostic positioning result for the wireless communication network anomaly is determined based on the tuned wireless communication network knowledge graph, an anomaly detection algorithm and an intelligent reasoning algorithm.

A plurality of tuning strategies are determined based on a strategy generation algorithm and the diagnostic positioning result, and one optimal tuning strategy is determined, from the plurality of tuning strategies by using a best result when considering an execution efficiency and an execution effect of a tuning strategy as a target, so as to perform tuning on the wireless communication network.
based on the tuned wireless communication network and in combination with an tuning strategy and intelligent algorithm evaluation model, improvement degrees on a network-level performance and a user-level performance of the wireless communication network by the tuning strategy, and a comprehensive capability evaluation result of each intelligent algorithm used, are determined.

Optionally, constructing the wireless communication network knowledge graph based on the endogenous factors of the wireless communication network and the graph construction method, and performing deep analysis and graph cyclic tuning in combination with the classified wireless communication network data includes the following operations.

Based on a graph model analysis algorithm and a data model analysis algorithm, new relationships among various entities in the wireless communication network knowledge graph are determined, association degrees of the relationships among the various entities are analyzed, the inter-entity relationship library is updated, and/or, one or more of: new entities, new entity types, and new entity attributes in the wireless communication network knowledge graph are determined, so as to update the entity library.

The wireless communication network knowledge graph is updated based on the updated entity library and/or the updated inter-entity relationship library.

The entity library and the inter-entity relationship library are determined based on the endogenous factors of the wireless communication network, wherein the endogenous factors of the wireless communication network includes indicators and data fields specified by wireless communication network protocols.

Optionally, determining the diagnostic positioning result for the wireless communication network anomaly based on the tuned wireless communication network knowledge graph and the anomaly detection and the intelligent reasoning algorithms includes the following operations.

Anomaly detection is performed on the wireless communication network based on the tuned wireless communication network knowledge graph and the anomaly detection algorithm, so as to determine a fault type.

One or more entities to which the fault type belongs in the wireless communication network knowledge graph are determined based on the fault type and the intelligent reasoning algorithm.

Optionally, determining the plurality of tuning strategies based on the strategy generation algorithm and the diagnostic positioning result, and determining, in combination with the intelligent decision algorithm, the one optimal tuning strategy from the plurality of tuning strategies by using the best result when considering the execution efficiency and the execution effect of the tuning strategy as the target, so as to perform tuning on the wireless communication network includes the following operations.

The plurality of tuning strategies of the wireless communication network are determined based on one or more entities to which a fault type belongs in the wireless communication network knowledge graph, and the strategy generation algorithm.

Based on the intelligent decision algorithm, the one optimal tuning strategy is determined by using the best result when considering the execution efficiency and the execution effect of the tuning strategy as the target, so as to perform tuning on the wireless communication network.

Optionally, the method further includes the following operation.

Based on the tuned wireless communication network and in combination with an tuning strategy and intelligent algorithm evaluation model, improvement degrees on a network-level performance and a user-level performance of the wireless communication network by the tuning strategy, and a comprehensive capability evaluation result of the intelligent algorithm used, are determined.

Optionally, based on the tuned wireless communication network and in combination with the tuning strategy and intelligent algorithm evaluation model, determining the improvement degrees on the network-level performance and the user-level performance of the wireless communication network by the tuning strategy, and the comprehensive capability evaluation result of each intelligent algorithm used includes the following operations.

Data of the tuned wireless communication network is acquired.

The improvement degrees on a performance of the wireless communication network by the tuning strategy in two dimensions of a network-level performance evaluation and a user-level performance evaluation is determined.

Based on the improvement degrees and the comprehensive capability evaluation result of the each intelligent algorithm, an intelligent algorithm that needs to be adjusted is determined, wherein the intelligent algorithm to be adjusted includes one or more of: a deep analysis algorithm, the anomaly detection algorithm, the intelligent reasoning algorithm, the strategy generation algorithm, and the intelligent decision algorithm.

Optionally, before constructing the wireless communication network knowledge graph based on the endogenous factor of the wireless communication network and the graph construction method, and performing deep analysis and graph cyclic tuning in combination with the classified wireless communication network data, the method further includes the following operation.

Raw data of the wireless communication network is acquired, pre-processing on the raw data is performed, and then classification storage on the preprocessed data is performed according to different data types, wherein the classification storage of different data types is implemented based on a distributed system architecture.

Optionally, the different data types include one or more of: terminal-side wireless air interface data, base station-side wireless air interface data, core network data, and network management data.

Optionally, entity types of elements in the entity library comprise one or more of: network-level performance evaluation indicator, a user-level performance evaluation indicator, a general non-tunable data parameter, and a tunable data parameter; entity relationships in the inter-entity relationship library comprise one or more of: a causal relationship, an implicit relationship, and an explicit relationship.

Optionally, determining the new relationships among various entities in the wireless communication network knowledge graph, analyzing the association degrees of the relationships among the various entities, and updating the inter-entity relationship library based on a graph model analysis algorithm and a data model analysis algorithm, and/or determining one or more of: new entities, new entity types, and new entity attributes in the wireless communication network knowledge graph, and updating the entity library includes the following operation.

Quantitative measurements of the association degrees of the relationships among the various entities in the wireless communication network knowledge graph are determined based on the graph model algorithm, and the inter-entity relationship library is updated.

One or more of: the new entities, the new entity types, the new entity attributes, and the new relationships among the various entities in the wireless communication network knowledge graph are determined based on the acquired classified wireless communication network data, and the entity library and/or the inter-entity relationship library are/is updated.

Optionally, updating the wireless communication network knowledge graph based on the updated entity library and/or the updated inter-entity relationship library includes the following operations.

Parameters to be tuned are determined based on wireless communication network protocol specifications and theoretical analysis algorithms, and the updated entity library and/or the inter-entity relationship library, wherein the parameters to be tuned in the wireless communication network knowledge graph include one or more of: parameters of entities, parameters of entity attributes, and parameters of inter-entity relationships.

The wireless communication network knowledge graph is updated based on the parameters to be tuned.

Optionally, the fault type includes a fault corresponding to different elements in the entity library and a fault corresponding to different elements in the inter-entity relationship library.

Optionally, determining, based on the fault type and the intelligent reasoning algorithm, the one or more entities to which the fault type belongs in the wireless communication network knowledge graph includes the following operations.

One or more entities to which the fault type belongs are determined, wherein the entity is a specific element in the entity library.

A position, a tunability, and an influence factor of the entity are determined based on an attribute of the entity, wherein the position includes a specific communication layer in which the entity is located or a position at which the entity is located in a graph structure, and the influence factor is an influence degree of the entity and other entities having an inter-entity relationship with the entity on the entity.

Optionally, the intelligent decision algorithm includes one or more of: a DRL algorithm, an MDP algorithm, a biology imitation algorithm, and a statistical learning algorithm.

Optionally, based on the improvement degrees and the comprehensive capability evaluation result of the intelligent algorithm, determining the intelligent algorithm that needs to be adjusted includes the following operations.

If the improvement degrees of the network-level performance and/or the user-level performance are/is not changed or decreased after the optimal tuning strategy is performed, the comprehensive capability evaluation result of each intelligent algorithm is determined.

Based on the comprehensive capability evaluation result of each intelligent algorithm, in combination with a corresponding evaluation criteria, the intelligent algorithm that needs to be adjusted is determined and updated.

It is to be noted here that, the electronic device provided in the embodiments of the present application can implement all method steps implemented by the method embodiments, and can achieve the same technical effect, and the part and beneficial effects same as the method embodiments in this embodiment are no longer described in detail.

In another aspect, the present disclosure further provides a computer program product. The computer program product includes a computer program stored in a non-transient computer readable storage medium. The computer program includes a program instruction. When the program instruction is executed by a computer, the computer can execute the steps of the method for intelligently analyzing and applying the wireless communication network knowledge graph provided in the embodiments. For example, the method includes the following operations.

The wireless communication network knowledge graph is constructed based on an endogenous factors of a wireless communication network and a graph construction method, and deep analysis and graph cyclic tuning are performed in combination with classified wireless communication network data.

A diagnostic positioning result for the wireless communication network anomaly is determined based on the tuned wireless communication network knowledge graph, an anomaly detection algorithm and an intelligent reasoning algorithm.

A plurality of tuning strategies are determined based on a strategy generation algorithm and the diagnostic positioning result, and one optimal tuning strategy is determined, from the plurality of tuning strategies by using a best result when considering an execution efficiency and an execution effect of a tuning strategy as a target, so as to perform tuning on the wireless communication network.

Optionally, the step further includes the following operation.

Based on the tuned wireless communication network and in combination with an tuning strategy and intelligent algorithm evaluation model, improvement degrees on a network-level performance and a user-level performance of the wireless communication network by the tuning strategy, as well as a comprehensive capability evaluation result of the intelligent algorithm used, are determined.

Optionally, before constructing the wireless communication network knowledge graph based on the endogenous factors of the wireless communication network and the graph construction method, and performing deep analysis and graph cyclic tuning in combination with the classified wireless communication network data, the method further includes the following operation.

Raw data of the wireless communication network is acquired, pre-processing on the raw data is performed, and then classification storage on the preprocessed data is performed according to different data types, wherein the classification storage of different data types is implemented based on a distributed system architecture.

In another aspect, an embodiment of the present application further provides a processor-readable storage medium. The processor-readable storage medium is configured to store a computer program The computer program is used for enabling a processor to execute steps of the method for intelligently analyzing and applying the wireless communication network knowledge graph provided in the embodiments. For example, the method includes the following operations.

The wireless communication network knowledge graph is constructed based on endogenous factors of a wireless communication network and a graph construction method, and deep analysis and graph cyclic tuning are performed in combination with classified wireless communication network data.

A diagnostic positioning result for the wireless communication network anomaly is determined based on the tuned wireless communication network knowledge graph, an anomaly detection algorithm and an intelligent reasoning algorithm.

A plurality of tuning strategies are determined based on a strategy generation algorithm and the diagnostic positioning result, and one optimal tuning strategy is determined, from the plurality of tuning strategies by using a best result when considering an execution efficiency and an execution effect of a tuning strategy as a target, so as to perform tuning on the wireless communication network.

Optionally, the step further includes the following operation.

Based on the tuned wireless communication network and in combination with an tuning strategy and intelligent algorithm evaluation model, improvement degrees on a network-level performance and a user-level performance of the wireless communication network by the tuning strategy, as well as a comprehensive capability evaluation result of the intelligent algorithm used, are determined.

Optionally, before constructing the wireless communication network knowledge graph based on the endogenous factors of the wireless communication network and the graph construction method, and performing deep analysis and graph cyclic tuning in combination with the classified wireless communication network data, the method further includes the following operation.

Raw data of the wireless communication network is acquired, pre-processing on the raw data is performed, and then classification storage on the preprocessed data is performed according to different data types, wherein the classification storage of different data types is implemented based on a distributed system architecture.

The processor-readable storage medium may be any usable medium or data storage device that the processor is able to access, including, but not limited to, magnetic memories (e.g., floppy disks, hard disks, magnetic tapes, magnetic optical disks (MO), etc.), optical memories (e.g., CDs, DVDs, BDs, HVDs, etc.), and semiconductor memories (e.g., ROMs, EPROMs, EEPROMs, nonvolatile memory (NAND FLASH), Solid State Disk (SSD)), etc.

The apparatus embodiments described above are merely illustrative. The units described as separate components may or may not be physically separated. The components displayed as units may or may not be physical units, that is, the components may be located in one place, or may be distributed on the plurality of network units. Part or all of the modules may be selected according to actual requirements to achieve the purposes of the solutions of this embodiment. It can be understood and implemented by those of ordinary skill in the art without creative labor.

Through the description of the above implementations, those skilled in the art may clearly understand that the implementations can be implemented by means of software and a necessary general hardware platform, definitely, it can also be implemented by means of hardware. Based on this understanding, the above technical solution can be embodied in the form of a software product in essence, or the part that contributes to the related art. The computer software product can be stored in a computer-readable storage medium, such as ROM/RAM, a magnetic disk, an optical disk, and the like, and includes a plurality of instructions to cause a computer device (which may be a personal computer, a server, or a network device, or the like) to perform the method described in various embodiments or some parts of the embodiments.

It is to be noted at last: the above various embodiments are only used to illustrate the technical solutions of the present disclosure and not used to limit the same. Although the present disclosure has been described in detail with reference to the foregoing embodiments, for those of ordinary skill in the art, they can still modify the technical solutions described in the foregoing embodiments, or equivalently replace part of the technical features; all these modifications and replacements shall not cause the essence of the corresponding technical solutions to depart from the scope of the technical solutions of the embodiments of the present disclosure.

## Claims

1. A system for intelligently analyzing and applying a wireless communication network knowledge graph, comprising at least:
a knowledge graph unit, an intelligent traceability unit, and a tuning strategy unit, wherein
the knowledge graph unit is configured to construct the wireless communication network knowledge graph based on endogenous factors of a wireless communication network and a graph construction method, and perform deep analysis and graph cyclic tuning in combination with classified wireless communication network data;
the intelligent traceability unit is configured to determine a diagnostic positioning result for a wireless communication network anomaly based on the tuned wireless communication network knowledge graph, an anomaly detection algorithm and an intelligent reasoning algorithm; and
the tuning strategy unit is configured to determine a plurality of tuning strategies based on a strategy generation algorithm and the diagnostic positioning result, and determine, in combination with an intelligent decision algorithm, one optimal tuning strategy from the plurality of tuning strategies by using a best result when considering an execution efficiency and an execution effect of a tuning strategy as a target, so as to perform tuning on the wireless communication network.

2. The system for intelligently analyzing and applying the wireless communication network knowledge graph as claimed in claim 1, wherein the knowledge graph unit comprises at least a deep analysis module and a graph tuning module;
the deep analysis module is configured to determine new relationships among various entities in the wireless communication network knowledge graph, analyze association degrees of the relationships among the various entities, and update an inter-entity relationship library based on a graph model analysis algorithm and a data model analysis algorithm; and/or determine one or more of: new entities, new entity types, and new entity attributes in the wireless communication network knowledge graph, and update an entity library;
the graph tuning module is configured to update the wireless communication network knowledge graph based on the updated entity library and/or the updated inter-entity relationship library;
the entity library and the inter-entity relationship library are determined based on the endogenous factors of the wireless communication network; and the endogenous factors of the wireless communication network comprises indicators and data fields specified by wireless communication network protocols.

3. The system for intelligently analyzing and applying the wireless communication network knowledge graph as claimed in claim 1, wherein the intelligent traceability unit comprises an anomaly detection module and an intelligent reasoning module;
the anomaly detection module is configured to perform anomaly detection on the wireless communication network based on the tuned wireless communication network knowledge graph and the anomaly detection algorithm, so as to determine a fault type; and
the intelligent reasoning module is configured to determine, based on the fault type and the intelligent reasoning algorithm, one or more entities to which the fault type belongs in the wireless communication network knowledge graph.

4. The system for intelligently analyzing and applying the wireless communication network knowledge graph as claimed in claim 1, wherein the tuning strategy unit comprises a strategy generation module and a strategy decision module;
the strategy generation module is configured to determine the plurality of tuning strategies of the wireless communication network based on one or more entities to which a fault type belongs in the wireless communication network knowledge graph, and the strategy generation algorithm; and
the strategy decision module is configured to, based on the intelligent decision algorithm, determine the one optimal tuning strategy by using the best result when considering the execution efficiency and the execution effect of the tuning strategy as the target, so as to perform tuning on the wireless communication network.

5. The system for intelligently analyzing and applying the wireless communication network knowledge graph as claimed in claim 1, further comprising a performance evaluation unit, wherein
the performance evaluation unit is configured to determine, based on the tuned wireless communication network in combination with a tuning strategy and intelligent algorithm evaluation model, improvement degrees on a network-level performance and a user-level performance of the wireless communication network by the tuning strategy, and a comprehensive capability evaluation result of an intelligent algorithm used by each unit, and feeding same back to a corresponding unit.

6. The system for intelligently analyzing and applying the wireless communication network knowledge graph as claimed in claim 5, wherein the performance evaluation unit comprises a network-level performance evaluation module and a user-level performance evaluation module; wherein
the network-level performance evaluation module and the user-level performance evaluation module are configured to:
acquire data of the tuned wireless communication network;
determine the improvement degrees on a performance of the wireless communication network by the tuning strategy in two dimensions of a network-level performance evaluation and a user-level performance evaluation; and
based on the improvement degrees and the comprehensive capability evaluation result of the intelligent algorithm, determine an intelligent algorithm that needs to be adjusted, wherein the intelligent algorithm that needs to be adjusted comprises one or more of: a deep analysis algorithm, the anomaly detection algorithm, the intelligent reasoning algorithm, the strategy generation algorithm, and the intelligent decision algorithm.

7. The system for intelligently analyzing and applying the wireless communication network knowledge graph as claimed in claim 1 or 5, further comprising a wireless data unit, wherein the wireless data unit is configured to acquire raw data of the wireless communication network, perform pre-processing on the raw data, and then perform classification storage on the preprocessed data according to different data types, wherein the classification storage of different data types is implemented based on a distributed system architecture.

8. The system for intelligently analyzing and applying the wireless communication network knowledge graph as claimed in claim 7, wherein a data type of the different data types comprises one or more of: terminal-side wireless air interface data, base station-side wireless air interface data, core network data, and network management data.

9. The system for intelligently analyzing and applying the wireless communication network knowledge graph as claimed in claim 2, wherein entity types of elements in the entity library comprise one or more of: a network-level performance evaluation indicator, a user-level performance evaluation indicator, a general non-tunable data parameter, and a tunable data parameter; entity relationships in the inter-entity relationship library comprise one or more of: a causal relationship, an implicit relationship, and an explicit relationship.

10. The system for intelligently analyzing and applying the wireless communication network knowledge graph as claimed in claim 2, wherein determining the new relationships among various entities in the wireless communication network knowledge graph, analyzing the association degrees of the relationships among the various entities, and updating the inter-entity relationship library based on the graph model analysis algorithm and the data model analysis algorithm; and/or determining one or more of: new entities, new entity types, and new entity attributes in the wireless communication network knowledge graph, and updating the entity library comprises:
based on the graph model algorithm, determine quantitative measurements of the association degrees of the relationships among the various entities in the wireless communication network knowledge graph, and update the inter-entity relationship library; and
based on the acquired classified wireless communication network data, determine one or more of: the new entities, the new entity types, the new entity attributes, and the new relationships among the various entities in the wireless communication network knowledge graph, and update the entity library and/or the inter-entity relationship library.

11. The system for intelligently analyzing and applying the wireless communication network knowledge graph as claimed in claim 2, wherein updating the wireless communication network knowledge graph based on the updated entity library and/or the updated inter-entity relationship library comprises:
determine parameters to be tuned based on wireless communication network protocol specifications and theoretical analysis algorithms, and the updated entity library and/or the updated inter-entity relationship library, wherein the parameter to be tuned in the wireless communication network knowledge graph comprises one or more of: parameters of entities, parameters of entity attributes, and parameters of inter-entity relationships; and
updating the wireless communication network knowledge graph based on the parameters to be tuned.

12. The system for intelligently analyzing and applying the wireless communication network knowledge graph as claimed in claim 3 or 4, wherein the fault type comprises a fault corresponding to different elements in the entity library and a fault corresponding to different elements in the inter-entity relationship library.

13. The system for intelligently analyzing and applying the wireless communication network knowledge graph as claimed in claim 3, wherein determining, based on the fault type and the intelligent reasoning algorithm, the one or more entities to which the fault type belongs in the wireless communication network knowledge graph comprises:
determine one or more entities to which the fault type belongs, wherein the entity is a specific element in the entity library; and
determine a position, a tunability, and an influence factor of the entity based on an attribute of the entity, wherein the position comprises a specific communication layer in which the entity is located or a position at which the entity is located in a graph structure, and the influence factor is an influence degree of the entity and other entities having an inter-entity relationship with the entity on the entity.

14. The system for intelligently analyzing and applying the wireless communication network knowledge graph as claimed in claim 1 or 4 or 6, wherein the intelligent decision algorithm comprises one or more of: a Deep Reinforcement Learning (DRL) algorithm, a Markov Decision Process (MDP) algorithm, a biology imitation algorithm, and a statistical learning algorithm.

15. The system for intelligently analyzing and applying the wireless communication network knowledge graph as claimed in claim 6, wherein based on the improvement degrees and the comprehensive capability evaluation result of the intelligent algorithm, determining the intelligent algorithm that needs to be adjusted comprises:
if the improvement degrees of the network-level performance and/or the user-level performance is not changed or decreased after the optimal tuning strategy is performed, determine the comprehensive capability evaluation result of the intelligent algorithm used by each unit; and
based on the comprehensive capability evaluation result of the intelligent algorithm used by each unit, in combination with a corresponding evaluation criteria, determine and update the intelligent algorithm that needs to be adjusted.

16. A method for intelligently analyzing and applying a wireless communication network knowledge graph, comprising:
constructing the wireless communication network knowledge graph based on endogenous factors of a wireless communication network and a graph construction method, and performing deep analysis and graph cyclic tuning in combination with classified wireless communication network data;
determining a diagnostic positioning result for a wireless communication network anomaly based on the tuned wireless communication network knowledge graph, an anomaly detection algorithm and an intelligent reasoning algorithm; and
determining a plurality of tuning strategies based on a strategy generation algorithm and the diagnostic positioning result, and determining, in combination with an intelligent decision algorithm, one optimal tuning strategy from the plurality of tuning strategies by using a best result when considering an execution efficiency and an execution effect of a tuning strategy as a target, so as to perform tuning on the wireless communication network.

17. The method for intelligently analyzing and applying the wireless communication network knowledge graph as claimed in claim 16, wherein constructing the wireless communication network knowledge graph based on the endogenous factors of the wireless communication network and the graph construction method, and performing deep analysis and graph cyclic tuning in combination with the classified wireless communication network data comprises:
determining new relationships among various entities in the wireless communication network knowledge graph, analyzing association degrees of the relationships among the various entities, and updating an inter-entity relationship library based on a graph model analysis algorithm and a data model analysis algorithm; and/or determining one or more of: new entities, new entity types, and new entity attributes in the wireless communication network knowledge graph, and updating an entity library; and
updating the wireless communication network knowledge graph based on the updated entity library and/or the updated inter-entity relationship library, wherein
the entity library and the inter-entity relationship library are determined based on the endogenous factors of the wireless communication network; and the endogenous factors of the wireless communication network comprises indicators and data fields specified by wireless communication network protocols.

18. The method for intelligently analyzing and applying the wireless communication network knowledge graph as claimed in claim 16, wherein determining the diagnostic positioning result for the wireless communication network anomaly based on the tuned wireless communication network knowledge graph, the anomaly detection algorithm and the intelligent reasoning algorithm comprises:
performing anomaly detection on the wireless communication network based on the tuned wireless communication network knowledge graph and the anomaly detection algorithm, so as to determine a fault type; and
determining, based on the fault type and the intelligent reasoning algorithm, one or more entities to which the fault type belongs in the wireless communication network knowledge graph.

19. The method for intelligently analyzing and applying the wireless communication network knowledge graph as claimed in claim 16, wherein determining the plurality of tuning strategies based on the strategy generation algorithm and the diagnostic positioning result, and determining, in combination with the intelligent decision algorithm, the one optimal tuning strategy from the plurality of tuning strategies by using the best result when considering the execution efficiency and the execution effect of the tuning strategy as the target, so as to perform tuning on the wireless communication network comprises:
determining the plurality of tuning strategies of the wireless communication network based on one or more entities to which a fault type belongs in the wireless communication network knowledge graph, and the strategy generation algorithm; and
based on the intelligent decision algorithm, determining the one optimal tuning strategy by using the best result when considering the execution efficiency and the execution effect of the tuning strategy as the target, so as to perform tuning on the wireless communication network.

20. The method for intelligently analyzing and applying the wireless communication network knowledge graph as claimed in claim 16, the method further comprising:
determining, based on the tuned wireless communication network in combination with a tuning strategy and intelligent algorithm evaluation model, improvement degrees on a network-level performance and a user-level performance of the wireless communication network by the tuning strategy, and a comprehensive capability evaluation result of each intelligent algorithm used.

21. The method for intelligently analyzing and applying the wireless communication network knowledge graph as claimed in claim 20, wherein determining, based on the tuned wireless communication network in combination with the tuning strategy and intelligent algorithm evaluation model, the improvement degrees on the network-level performance and the user-level performance of the wireless communication network by the tuning strategies, and the comprehensive capability evaluation result of the each intelligent algorithm used comprises:
acquiring data of the tuned wireless communication network;
determining the improvement degrees on a performance of the wireless communication network by the tuning strategy in two dimensions of a network-level performance evaluation and a user-level performance evaluation; and
based on the improvement degrees and the comprehensive capability evaluation result of each intelligent algorithm, determining an intelligent algorithm that needs to be adjusted, wherein the intelligent algorithm that needs to be adjusted comprises one or more of: a deep analysis algorithm, the anomaly detection algorithm, the intelligent reasoning algorithm, the strategy generation algorithm, and the intelligent decision algorithm.

22. The method for intelligently analyzing and applying the wireless communication network knowledge graph as claimed in claim 16 or 20, wherein before constructing the wireless communication network knowledge graph based on the endogenous factors of the wireless communication network and the graph construction method, and performing deep analysis and graph cyclic tuning in combination with the classified wireless communication network data, the method further comprises:
acquiring raw data of the wireless communication network, performing pre-processing on the raw data, and then performing classification storage on the preprocessed data according to different data types, wherein the classification storage of different data types is implemented based on a distributed system architecture.

23. The intelligent analysis and application method for a wireless communication network knowledge graph as claimed in claim 22, wherein a data type of the different data types comprises one or more of: terminal-side wireless air interface data, base station-side wireless air interface data, core network data, and network management data.

24. The method for intelligently analyzing and applying the wireless communication network knowledge graph as claimed in claim 17, wherein entity types of elements in the entity library comprise one or more of: a network-level performance evaluation indicator, a user-level performance evaluation indicator, a general non-tunable data parameter, and a tunable data parameter; entity relationships in the inter-entity relationship library comprise one or more of: a causal relationship, an implicit relationship, and an explicit relationship.

25. The method for intelligently analyzing and applying the wireless communication network knowledge graph as claimed in claim 17, wherein determining the new relationships among various entities in the wireless communication network knowledge graph, analyzing the association degrees of the relationships among the various entities, and updating the inter-entity relationship library based on the graph model analysis algorithm and the data model analysis algorithm, and/or determining one or more of: new entities, new entity types, and new entity attributes in the wireless communication network knowledge graph, and updating the entity library comprises:
based on the graph model algorithm, determining quantitative measurements of the association degrees of the relationships among the various entities in the wireless
communication network knowledge graph, and updating the inter-entity relationship library; and
based on the acquired classified wireless communication network data, determining one or more of: the new entities, the new entity types, the new entity attributes, and the new relationships among the various entities in the wireless communication network knowledge graph, and updating the entity library and/or the inter-entity relationship library.

26. The method for intelligently analyzing and applying the wireless communication network knowledge graph as claimed in claim 17, wherein updating the wireless communication network knowledge graph based on the updated entity library and/or the updated inter-entity relationship library comprises:
determining parameters to be tuned based on wireless communication network protocol specifications and theoretical analysis algorithms, and the updated entity library and/or inter-entity relationship library, wherein the parameters to be tuned in the wireless communication network knowledge graph comprise one or more of: parameters of entities, parameters of entity attributes, and parameters of inter-entity relationships; and
updating the wireless communication network knowledge graph based on the parameters to be tuned.

27. The method for intelligently analyzing and applying the wireless communication network knowledge graph as claimed in claim 18 or 19, wherein the fault type comprises a fault corresponding to different elements in the entity library and a fault corresponding to different elements in the inter-entity relationship library.

28. The intelligent analysis and application method for the wireless communication network knowledge graph as claimed in claim 18, wherein determining, based on the fault type and the intelligent reasoning algorithm, the one or more entities to which the fault type belongs in the wireless communication network knowledge graph comprises:
determining one or more entities to which the fault type belongs, wherein the entity is a specific element in the entity library; and
determining a position, a tunability, and an influence factor of the entity based on an attribute of the entity, wherein the position comprises a specific communication layer in which the entity is located or a position at which the entity is located in a graph structure, and the influence factor is an influence degree of the entity and other entities having an inter-entity relationship with the entity on the entity.

29. The method for intelligently analyzing and applying the wireless communication network knowledge graph as claimed in claim 16 or 19 or 21, wherein the intelligent decision algorithm comprises one or more of: a Deep Reinforcement Learning (DRL) algorithm, a Markov Decision Process (MDP) algorithm, a biology imitation algorithm, and a statistical learning algorithm.

30. The method for intelligently analyzing and applying the wireless communication network knowledge graph as claimed in claim 21, wherein based on the improvement degrees and the comprehensive capability evaluation result of the intelligent algorithm, determining the intelligent algorithm that needs to be adjusted comprises:
if the improvement degrees of the network-level performance and/or the user-level performance are/is not changed or decreased after the optimal tuning strategy is performed, determining the comprehensive capability evaluation result of each intelligent algorithm; and
based on the comprehensive capability evaluation result of each intelligent algorithm, in combination with a corresponding evaluation criteria, determining and updating the intelligent algorithm that needs to be adjusted.

31. An electronic device, comprising a memory, a transceiver, and a processor, wherein
the memory is configured to store a computer program; the transceiver is configured to receive and send data under a control of the processor; and the processor is configured to execute the computer program in the memory and implement steps of the method for intelligently analyzing and applying the wireless communication network knowledge graph as claimed in any one of claims 16 to 30.

32. A computer-readable storage medium, having a computer program stored therein, wherein the computer program is configured to enable a computer to execute steps of the method for intelligently analyzing and applying the wireless communication network knowledge graph as claimed in any one of claims 16 to 30.
